Europäisches Patentamt

European Patent Office

Office européen des brevets

(11) Publication number: **0 358 402**
**A1**

## (12) EUROPEAN PATENT APPLICATION

(21) Application number: 89308773.4

(22) Date of filing: 30.08.89

(51) Int. Cl.⁵: **B63B 35/04**

(30) Priority: 09.09.88 GB 8821139

(43) Date of publication of application:
14.03.90 Bulletin 90/11

(84) Designated Contracting States:
BE ES FR GB IT NL

(71) Applicant: BRITISH TELECOMMUNICATIONS
public limited company
81 Newgate Street
London EC1A 7AJ(GB)

(72) Inventor: Cole, Christopher
1 Bishops Court Bishopstoke
Hants. S05 6PE(GB)
Inventor: Shrubsole, Ray Charles
17 Dale Road Hythe
Southampton S04 5DS(GB)
Inventor: Smith, Trevor John
19 Asdown Rd. Fawley
Southampton, S04 1EF(GB)

(74) Representative: Buttrick, Richard et al
British Telecommunications plc Intellectual
Property Unit 151 Gower Street
London WC1E 6BA(GB)

(54) Laying submarine cable.

(57) A guide for laying cable from the bow of a ship at sea has a plurality of tubular sections 5, through which the cable can pass, which are interconnected by a wire rope 8 so that, in use, when suspended from the bow 2 of the ship 1, the guide takes up a catenary in the sea, and cable passed through the guide is prevented thereby from fouling the ship.

Fig.1.

EP 0 358 402 A1

## LAYING SUBMARINE CABLE

The present invention relates to the laying of submarine cable and, in particular, to the passing overboard from a ship of submarine cable.

Cable-laying ships are usually adapted to lay cable either from the stern or the bow. In either case, a sheave is provided around which the cable can pass from the ship into the water. The cable takes up the form of a catenary as it enters the water, with the catenary angle being determined by the form and weight of the cable and speed of the ship. Heavy, armoured cable can be laid satisfactorily from a bow-laying ship because the catenary angle of the cable is sufficient to keep it from fouling the ship below the water line, but lightweight deep-water cable has to be laid from stern-laying ships because this cable takes up a very shallow catenary angle on entering the water and, even at very slow laying speeds, would drag along the side of a ship if laid from the bows.

It would be desirable to use either a stern- or bow-laying ship for laying lightweight deep-water cable to avoid delays and thereby reduce costs.

The present invention seeks to provide an apparatus and method to facilitate the laying of submarine cable from a bow-laying ship.

The invention accomplishes this by providing for a bow-laying ship, a guide securable to the ship with an upper ship-board end into which cable to be laid enters, and a lower end in the sea, through which the cable emerges as it is being laid, so that the cable is kept away from the ship and the cable does not foul the ship.

According to a first aspect, the invention provides a guide for laying cable from the bow of a ship at sea, comprising:
a plurality of tubular sections, through which the cable can pass, and the tubular sections of the guide being interconnected so that, in use, when suspended from the bow of the ship, the guide takes up a catenary in the sea, and cable passed through the guide is prevented thereby from fouling the ship.

The invention allows a bow-laying ship to lay lightweight cables which could otherwise foul the ship while being laid, but which can be guided clear of the ship by means of the guide.

While within the guide, the cable takes up the catenary of the guide, and the cable only takes up its own catenary when discharged from the guide.

Preferably, the guide is weighted, for example by means of lead ballast in pockets of the tubular sections, so as to take up a catenary with a large catenary angle, whereby a discharge end of the guide will be below the keel of the ship.

According to another aspect, the invention provides a kit of parts for a guide for attachment to a ship for guiding cable to be laid from the ship at sea, comprising a plurality of tubular sections, each with a first through-hole for guiding cable to be laid, and having a second through-hole; and cordage for interconnecting sections of the guide by passing through the second through-holes of the tubular sections.

Preferably, the tubular sections of the kit of parts each have a third through-hole, and the kit of parts includes cordage for passing through sections of the guide by the third through-holes to restrain the tubular sections from rotating about the first interconnecting cordage.

Preferably, each tubular section of the kit of parts has lead ballast mounted on or within one or more tubular sections, conveniently axially-extending compartments may be provided in walls of the tubular sections for receiving lead ballast.

It is preferable that the tubular sections are streamlined, and that any ballast is provided adjacent that part of the tubular sections which is to be lowermost when the guide is in the water.

Preferably, the first cordage is wire rope, and the second cordage is elastic cord.

According to a further aspect, the invention provides a kit of parts for a guide for guiding cable to be laid from a ship, comprising a plurality of hinged-together pairs of tubular half-sections; cordage for interconnecting sections of the guide; and means for securing each hinged-together pair of tubular half-sections closed together to provide tubular sections each having a first through-hole for guiding cable, and a second through-hole, so that the assembled tubular sections can be interconnected by the cordage passing through each second through-hole, to provide a guide for cable to be laid to pass through the first through-hole of each tubular section in turn.

According to yet a further aspect, the invention comprises a method of guiding cable to be laid from a ship, comprising guiding the cable to be laid along a catenary path at variance from the natural catenary path of the cable to be laid, so that the cable to be laid is directed away from the ship so as not to foul the ship while being laid.

According to a yet further aspect, the invention provides a tubular section for a guide for laying cable from a ship, comprising a tubular body with a first through-hole for guiding cable to be laid, and a second through-hole through which cordage can be passed to interconnect similar tubular sections to form a guide.

Preferably, there is a third axial through-hole through which a second interconnecting cordage can pass to interconnect adjacent tubular sections to restrict rotation of the sections about the first cordage.

Preferably, the tubular sections are streamlined and have an extended trailing edge which is uppermost when the guide is in the water, and also a rounded forward edge which is lowermost in the water when the guide is in use. Preferably, pockets are provided in the forward streamlined edge, for receiving lead ballast.

The tubular sections of the guide can conveniently be made in symmetrical hinged-together half-sections, each of which has a transverse hole so that the two halves can be bolted securely together. Conveniently, the through-holes can be formed half in each section, ie as semi-circular grooves. This form of construction also facilitates assembly of the guide by allowing the half-sections to be bolted about the interconnecting cordage, rather than having the interconnecting cordage fed through the axial holes in the tubular sections.

A preferred embodiment of the invention will now be described by way of example, and with reference to the accompanying drawings wherein:

- Figure 1 is a schematic drawing of a guide according to the preferred embodiment of the invention, mounted on a bow-laying cable ship;

- Figure 2 is a schematic view of part of a guide of a preferred embodiment, partly cut away, and showing some hidden detail; and

- Figure 3 is an end-view of a streamlined tubular section which constitutes a major part of the guide of the preferred embodiment of the invention.

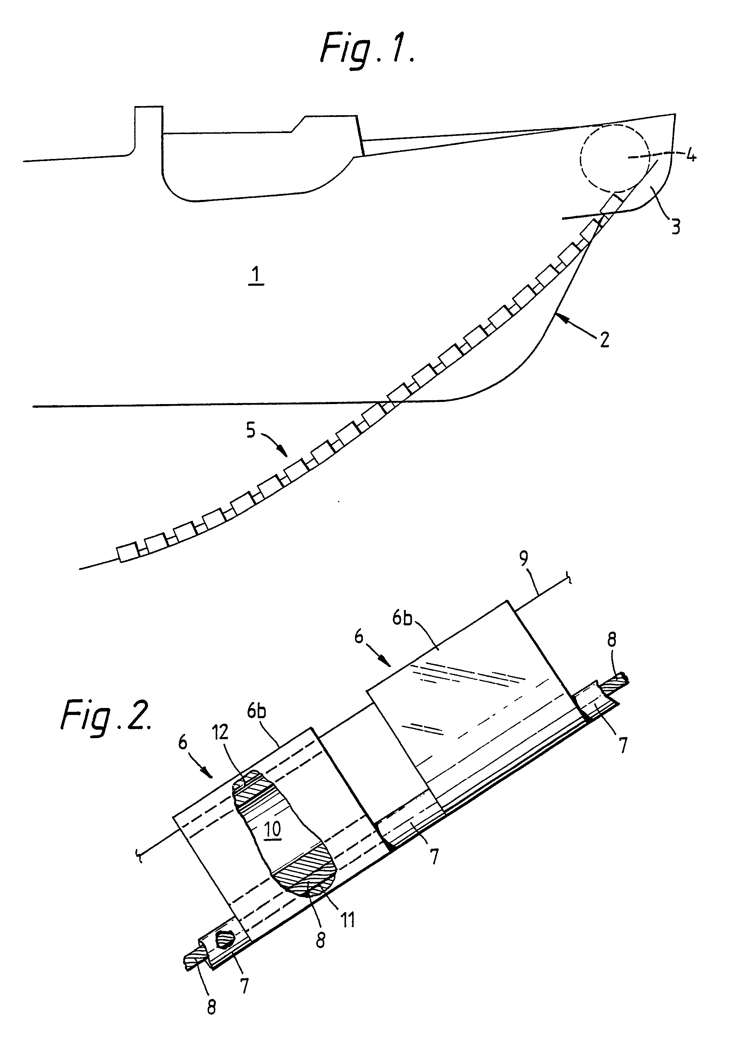

Referring first to Figures 1 and 2, a guide of the preferred embodiment of the invention will be described in relation to its use with a ship 1 having a bow 2 with bow whiskers 3 and a sheave 4 around which cable to be laid can pass. A guide 5 for guiding the cable during laying generally comprises a plurality of tubular sections 6 arranged alternately with tubular spacers 7, and an interconnecting a wire rope 8. An elastic cord 9 passes through the tubular sections 6, only. The guide 5 is attached at an upper end 5a, at the bow of the ship adjacent to the sheave 4, conveniently on a bridle at the bow whiskers, and a lower end 5b of the guide lies in the sea beneath the ship.

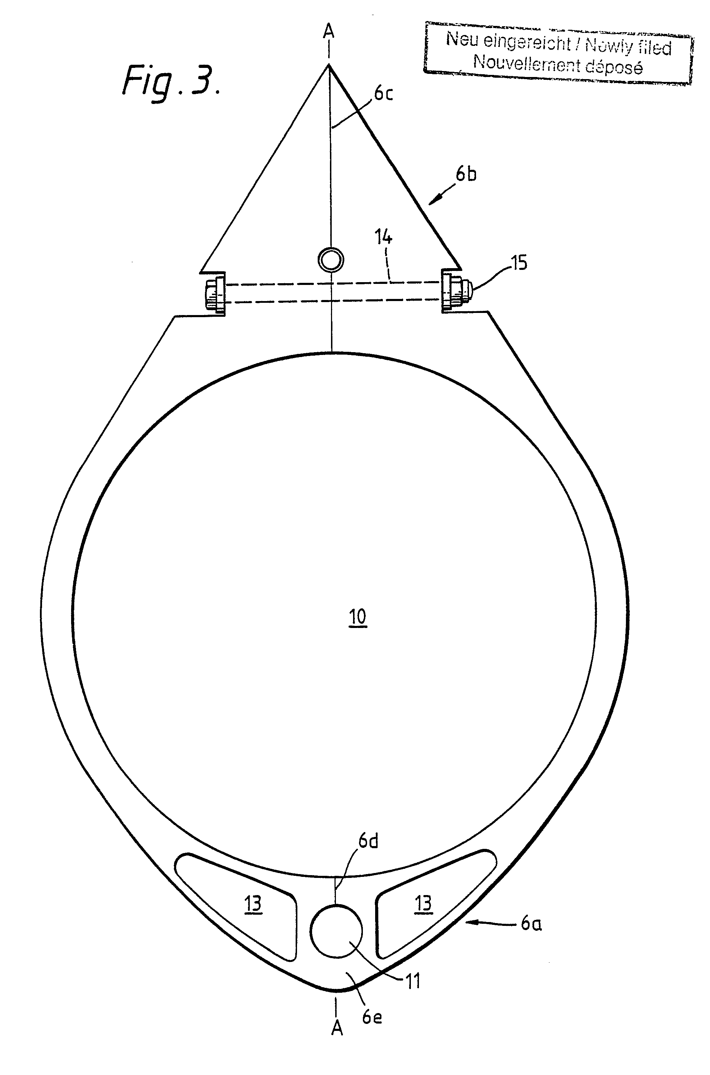

Referring to Figures 2 and 3 of the drawings, each tubular section 6 has, in addition to its major axial through-hole 10, which is for guiding cable, a second, axially parallel through-hole 11 for the interconnecting wire 8, and a third, axially parallel through-hole 12 for the elastic interconnecting cord 9. The tubular sections 6 are streamlined to have a lower/forward edge 6a and an elongate, streamlined upper/rear trailing edge 6b. In the lower/forward rounded edge 6a, pockets 13 for receiving lead ballast are provided. As shown in Figure 3, each tubular section 6 is formed with two symmetric halves about a dividing line A-A. In the embodiment, the tubular section 6 is of one piece longitudinally split along an upper split face 6c towards the upper edge 6b, and a lower split face 6d towards the lower edge 6a. The two halves of the tubular section remain attached to one another through a resilient hinge forming portion 6e. The two halves each have a transverse hole 14 for receiving a nut and bolt 15 for securing the two half-sections closed together. Conveniently, each of the three through-holes 10, 11 and 12 are formed half in each half-section.

The spacers 7 are simple tubes with an internal diameter sufficient to receive the wire cable 8, and an external diameter small enough not to interfere with the guide cable through-hole 10 when the spacer is between two of the guide sections 6, see Figure 2. The tubular guide sections 6 and spacers 7 are made from polyurethane.

In use, when lightweight deep-water cable is to be laid, the hinged-together halves of the sections are bolted about the cable, with the wire rope 8 in the second through-hole 11, and are arranged alternately along the wire rope 8 with the spacers 7. The elastic cord 9 is then threaded through the cord holes 12 in the upper trailing edge of the tubular sections. The tubular sections and spacers thus strung together to form the guide are put overboard with the wire rope secured to a bridle at the bow's whiskers. The guide takes up a catenary determined by the form and weight of the guide, and also the speed of the ship through the water. By selecting the ballast weight of the guide sections appropriately, it can be arranged for the guide catenary to extend to below the keel of the ship, with the lower end 5b of the guide in clear water. The cable, and repeaters, can then pass overboard about the sheave 4 into the upper end of the guide 5a, along the guide following the catenary of the guide, and then out from the lower end 5b of the guide into free water, well clear of the keel of the ship.

While in the water, the elastic cord 9 prevents the tubular guide sections 6 from rotating about the wire cable 8.

In modifications to the preferred embodiment, means may be provided at the lower end of the guide for adjusting the position of the guide in the water. These means may, for example, be adjustable hydrofoils or motors driving propellers under remote control from the ship. By the use of such means, the end of the guide may be moved relative to the ship to, for example, accurately place cables and flexibles on the sea bed or in a pre-cut trench.

## Claims

1. A guide for laying cable from the bow of a ship at sea, comprising:
a plurality of tubular sections, through which the cable can pass, and the tubular sections of the guide being interconnected so that, in use, when suspended from the bow of the ship, the guide takes up a catenary in the sea, and cable passed through the guide is prevented thereby from fouling the ship.

2. A guide as claimed in claim 1, wherein the guide is weighted by means of ballast, so as to take up a catenary with a large catenary angle, whereby a discharge end of the guide will be below the keel of the ship.

3. A guide as claimed in claim 1 or 2, wherein the tubular sections are streamlined.

4. A kit of parts for a guide for attachment to a ship for guiding cable to be laid from the ship at sea, comprising a plurality of tubular sections, each with a first through-hole for guiding cable to be laid, and having a second through-hole; and cordage for interconnecting sections of the guide by passing through the second through-holes of the tubular sections.

5. A kit of parts as claimed in claim 4, wherein the tubular sections each have a third through-hole, and the kit of parts includes cordage for passing through sections of the guide by the third through-holes to restrain the tubular sections from rotating about the first interconnecting cordage.

6. A kit of parts as claimed in claim 4 or 5, wherein each tubular section of the kit of parts has ballast mounted on or within one or more tubular sections.

7. A kit of parts as claimed in claim 5, wherein axially-extending compartments are provided in walls of the tubular sections for receiving lead ballast.

8. A kit of parts as claimed in claim 5, 6 or 7, wherein the tubular sections are streamlined.

9. A kit of parts for a guide for guiding cable to be laid from a ship, comprising a plurality of hinged-together pairs of tubular half-sections; cordage for interconnecting sections of the guide; and means for securing each hinged-together pair of tubular half-sections closed together to provide tubular sections each having a first through-hole for guiding cable, and a second through-hole, so that the tubular sections can be interconnected by the cordage passing through each second through-hole, to provide a guide for cable to be laid, by the cable passing through the first through-hole of each tubular section in turn.

10. A method of guiding cable to be laid from a ship, comprising guiding the cable to be laid along a catenary path at variance from the natural catenary path of the cable to be laid, so that the cable to be laid is directed away from the ship so as not to foul the ship while being laid.

11. A tubular section for a guide for laying cable from a ship, comprising a tubular body with a first through-hole for guiding cable to be laid, and a second through-hole through which cordage can be passed to interconnect similar tubular sections to form a guide.

12. A tubular section as claimed in claim 1, wherein there is a third axial through-hole through which a second interconnecting cordage can pass to interconnect adjacent tubular sections to restrict rotation of the sections about the first cordage.

13. A tubular section as claimed in claim 11 or 12, wherein the body is streamlined by having an extended trailing edge which is uppermost when the guide is in the water, and a rounded forward edge which is lowermost in the water when the guide is in use.

14. A tubular section as claimed in claim 13, wherein pockets are provided in the forward streamlined edge, for receiving lead ballast.

15. A tubular section as claimed in claim 11, 12, 13 or 14, wherein the body has symmetrical hinged-together sections, each of which has a transverse hole so that the two halves can be bolted securely together.

# Fig.1.

# Fig.2.

EP 0 358 402 A1

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 012 918 (SUZUKI) <br> * Figure 2 * <br> --- | 1 | B 63 B 35/04 |
| A | FR-A-2 302 909 (PARESY) <br> * Whole document * <br> --- | 1,2 | |
| A | GB-A-1 113 914 (S.E.G.A.N.S.) <br> * Whole document * <br> --- | 1,2 | |
| A | GB-A- 920 720 (COMPAGNIE GENERALE D'ELECTRICITE) <br> ----- | | |

TECHNICAL FIELDS SEARCHED (Int. Cl.5)

B 63 B
F 16 L
H 02 G
E 02 F

The present search report has been drawn up for all claims

| Place of search | Date of completion of the search | Examiner |
|---|---|---|
| THE HAGUE | 10-11-1989 | DE SCHEPPER H.P.H. |